# EUROPÄISCHE PATENTSCHRIFT

(11) **EP 1 593 438 B1**
(45) Veröffentlichungstag und Bekanntmachung des Hinweises auf die Patenterteilung: **25.02.2009**
(21) Anmeldenummer: 05008963.0
(22) Anmeldetag: 23.04.2005
(51) Int. Cl.: B05C 3/10

(54) **Vorrichtung und Verfahren zur Herstellung von Sandwich-Verbundelementen**
Device and method for manufacturing sandwich composite material elements
Dispositif et procédé de fabrication d'éléments en materiau composite du type sandwich

(30) Priorität: 07.05.2004 DE 102004022677
(43) Veröffentlichungstag der Anmeldung: 09.11.2005
(73) Patentinhaber: Bayer MaterialScience AG, 51368 Leverkusen (DE)
(72) Erfinder: Rüb, Thomas, 51375 Leverkusen (DE); Van de Braak, Johannes, 53804 Much (DE)

(56) Entgegenhaltungen:
- US-A- 3 649 408

## Beschreibung

Die Erfindung betrifft eine Vorrichtung sowie ein Verfahren zur kontinuierlichen oder diskontinuierlichen Herstellung von Sandwich-Verbundelementen, insbesondere Metall-Schaumstoff-Verbundelementen.

Im Rahmen der vorliegenden Erfindung wird unter einem Sandwich-Verbundelement ein Verbundelement verstanden, welches wenigstens aus zwei Deckschichten und einer dazwischen liegenden Kernschicht aufgebaut ist. Im besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff. Derartige Metall-Schaumstoff-Verbundelemente auf Basis von Metalldeckschichten und einer Kernschicht aus Polyurethan-Hartschaumstoff sind aus dem Stand der Technik hinlänglich bekannt und werden auch als Metallverbundelemente bezeichnet. Zwischen der Kernschicht und den Deckschichten können weitere Schichten vorgesehen sein. Beispielsweise können die Deckschichten, z.B. mit einem Lack, beschichtet sein.

Beispiele für die Anwendung solcher Metallverbundelemente sind ebene oder linierte Wandelemente sowie profilierte Dachelemente für den Industriehallenbau und Kühlhausbau. Auch finden die Metallverbundelemente als LKW-Aufbauten, Hallentüren und Tore sowie im Containerbau Einsatz.

Die Herstellung dieser Metallverbundelemente nach einem kontinuierlichen oder diskontinuierlichen Verfahren ist aus dem Stand der Technik hinlänglich bekannt. Vorrichtungen zur kontinuierlichen Herstellung sind z.B. aus DE 1 609 668 A oder DE 1 247 612 A bekannt.

Ferner ist für Metallverbundelemente bekannt, vor dem Ausschäumen der Kernschicht auf die Deckschichten chemische Komponenten wie Haftvermittler, Bindemittel, Harze o.dgl. zur Erhöhung der Haftung des Schaumstoffs auf den Metalldeckschichten aufzubringen. So ist z.B. die Verwendung von Polymerisationsklebern in DE 1 176 834 A beschrieben. Im Rahmen der vorliegenden Erfindung werden derartige chemische Komponenten, welche im Wesentlichen die Aufgabe haben, die Haftung der Kernschicht mit den Deckschichten zu verbessern, vereinfachend als Haftvermittler bezeichnet.

Neben der unzureichenden Haftung der Kernschicht auf den Deckschichten besteht ein weiteres Problem darin, dass in Grenzbereichen der Schaumstoff-Kernschicht nahe der Deckschichten Störungen im Schaumstoff, in der Regel in Form von Blasen oder veränderten Zellstrukturen, auftreten. Diese Störungen im Schaumstoff können die Einsatzfähigkeit der Metallverbundelemente einschränken und sind daher unerwünscht. Sie können jedoch durch einen Haftvermittler, der auf die Deckschichten aufgetragen wird, reduziert oder ganz vermieden werden.

Üblicherweise werden solche Haftvermittler durch Aufsprühen oder Auftropfen mittels Düsen, Tropfleisten, Harken o.dgl. oder Bestreichen mittels Bürsten, Pinsel, Walzen o.dgl. auf die Deckschichten aufgetragen.

Die bekannten Verfahren zum Aufbringen des Haftvermittlers sind z.T. vergleichsweise aufwändig und/oder führen zu einem ungleichmäßigen Auftrag des Haftvermittlers. Zudem ist mit dem Sprühauftrag des Haftvermittlers eine starke Aerosolbildung verbunden. Dabei gehen einerseits gewisse Mengen des Haftvermittlers verloren, da sich nicht der gesamte versprühte Haftvermittler auf den Deckschichten niederschlägt, sondern an die Umgebung abgegeben wird. Andererseits muss die Emission des Sprühnebels an die Umgebung durch aufwändige Absaugvorrichtungen vermieden werden. Je nach Art des Haftvermittlers kann es dabei zu Verstopfungen der Absaugvorrichtung kommen.

Aufgabe der vorliegenden Erfindung ist es daher, eine Vorrichtung sowie ein Verfahren zur Herstellung von Sandwich-Verbundelementen, insbesondere Metall-Schaumstoff-Verbundelementen, bereitzustellen, bei dem die Nachteile des Standes der Technik beim Auftragen eines Haftvermittlers vermieden werden.

Gegenstand der Erfindung ist eine Vorrichtung zur Herstellung von Sandwich-Verbundelementen, wenigstens bestehend aus zwei Zuführvorrichtungen für Deckschichten, an die eine Auftragsvorrichtung für einen Haftvermittler, eine Auftragsvorrichtung für eine Kemschicht, eine Fördervorrichtung und eine Ablängvorrichtung hintereinander geschaltet sind, wobei die Auftragsvorrichtung für den Haftvermittler wenigstens aus einer Zuführleitung für den Haftvermittler, einem Drehteller mit mindestens einer seitlichen Austrittsöffnung sowie einem Antrieb für den Drehteller besteht.

Die erfindungsgemäße Vorrichtung umfasst zwei Zuführvorrichtungen für zwei Deckschichten, d.h. je eine Zuführeinrichtung für jede Deckschicht. Die Zuführvorrichtungen können im Falle von z.B. verhältnismäßig dünnen, metallischen Deckschichten Abwickelvorrichtungen, z.B. Spulen oder Rollen, sein. Kann das Material für die Deckschichten nicht aufgewickelt werden, so können die Deckschichten auch in Form von Platten zugeführt werden. Geeignete Vorrichtungen für die Beschickung einer Anlage mit Platten sind aus dem Stand der Technik bekannt.

An die Zuführvorrichtungen schließt sich ggf. eine Profiliervorrichtung zur Umformung der Deckschichten an. Die Profiliervorrichtung kann z.B. aus Rollengängen aufgebaut sein. Das Umformen kann jedoch auch mittels Pressen erfolgen.

Nach der Profiliervorrichtung folgt ggf. eine Heizvorrichtung zum Aufheizen der Deckschichten. Zum Heizen werden beispielsweise verwendet: Gasflammen, Heißluft, Heizstrahler, Heizröhren.

Im Anschluss an die Heizvorrichtung erfolgt der Auftrag eines Haftvermittlers mittels einer Auftragsvorrichtung.

Hieran schließt sich der Auftrag einer Kemschicht, insbesondere eines Schaumstoff-Reaktionsgemisches für die Herstellung eines Hartschaumstoffs, mittels einer Auftragsvorrichtung an. Hierfür geeignete Auftragsvorrichtung sind aus dem Stand der Technik bekannt. Wird wie im Falle einer Kernschicht aus Hartschaumstoff ein flüssiges Schaumstoff-Reaktionsgemisch zum Ausschäumen aufgetragen, umfasst die Auftragsvorrichtung ein Mischorgan für die Herstellung des Schaumstoff-Reaktionsgemisches sowie ein Auftragsorgan für das Reaktionsgemisch. Die Vermischung der Komponenten kann in einem Rührwerksmischer oder mittels Hochdruckvermischung, z.B. im Gegenstromverfahren, erfolgen, wobei mindestens zwei Komponenten in dem Mischkopf vermischt werden. Nach dem Austritt aus dem Mischkopf gelangt das Reaktionsgemisch zum Auftragsorgan. Als Auftragsorgan kann beispielsweise eine Gießharke oder eine Düse, insbesondere eine Zungendüse, eingesetzt werden. Zum gleichmäßigen Auftrag auf die untere Deckschicht wird die Auftragsvorrichtung, z.B. der Mischkopf mit dem Auftragsorgan, in der Regel oszillierend über die Breite der Metalldeckschicht geführt.

Alternativ zum Auftrag eines Schaumstoff-Reaktionsgemisches für die Kernschicht kann auch eine vorgefertigte Platte als Kernschicht zwischen die Deckschichten aufgebracht werden. Vorgefertigte Platten können beispielsweise aus Mineralfasern oder Hartschaumstoff, z.B. PUR- oder PIR-Hartschaumstoff, Polystyrolschaumstoff, Phenolharzschaumstoff sein. In diesem Fall wird die Kernschicht mit den Deckschichten durch Kleben verbunden. Die Auftragsvorrichtung für die Kernschicht umfasst hierfür mindestens ein Auftragsorgan für einen Klebstoff sowie eine Vorrichtung zur Beschickung der Anlage mit einer plattenförmigen Kernschicht. Geeignete Vorrichtungen für das Auftragen von Klebstoffen sowie die Beschickung mit Platten sind dem Fachmann geläufig.

An die Auftragsvorrichtung für die Kernschicht schließt sich im Falle einer Kernschicht aus einem Schaumstoff in der Regel zunächst eine Aufschäumstrecke an. Das Aufschäumen beginnt aus dem flüssigen Zustand nach kurzer Liegezeit in der Aufschäumstrecke, wobei der Schaumstoff den Raum zwischen den beiden Deckschichten nach und nach, d.h. mit zunehmender Wegstrecke, füllt.

Auf die Aufschäumstrecke wiederum folgt eine Fördervorrichtung, insbesondere in Form eines Doppeltransportbandes. Die Fördervorrichtung verleiht dem Verbundelement seine Dimensionen in Höhe und Breite. Das Doppeltransportband besteht aus zwei aus Stahlplatten zusammengesetzten Förderbändern, die oberhalb der oberen und unterhalb der unteren Deckschicht angeordnet sind. Die mit dem Verbundelement im Allgemeinen ohne Schlupf mitlaufenden Stahlplatten des Doppeltransportbandes begrenzen die Expansion des Schaums nach oben und unten. Zu beiden Seiten wird der expandierende Schaum z.B. durch mitlaufende Klotzketten begrenzt. Das obere Band des Doppeltransportbandes ist in der Höhe verstellbar, um unterschiedliche Verbundelementdicken herstellen zu können. Die Fördervorrichtung kann beheizt sein, um den Ausschäumprozess zu unterstützen.

Eine Fördervorrichtung nach dem Prinzip eines Doppeltransportbandes ist z.B. in DE 1 609 668 A beschrieben.

Die endlos hergestellten Metall-Schaumstoff-Verbundelemente werden hinter der Fördervorrichtung in einer Ablängvorrichtung auf ein gewünschtes Maß geschnitten. Als Ablängvorrichtung dienen z.B.: Bandsägen, Blatt- oder Kreissägen, Bandsäge in Verbindung mit einer Kreissäge oder Schlagscheren.

Erfindungsgemäß umfasst die Vorrichtung für den Auftrag des Haftvermittlers mindestens eine Zuführleitung, einen Drehteller mit mindestens einer seitlichen Austrittsöffnung für den Produktaustritt sowie einen Antrieb für den Drehteller. Der Drehteller kann pneumatisch, elektrisch oder hydraulisch angetrieben sein. Erfindungsgemäß wird der Haftvermittler auf die untere, ebene oder profilierte Deckschicht aufgebracht. Durch die Rotation des Drehtellers wird der Haftvermittler, welcher aus den seitlichen Austrittsöffnungen austritt, gleichmäßig als zerfallender Strahl in kleinsten Tröpfchen auf der unteren Deckschicht aufgetragen.

Die Auftragsvorrichtung ist in der Vorrichtung zur Herstellung der Verbundelemente so positioniert, dass der Haftvermittler an geeigneter Stelle zwischen der Heizvorrichtung (auch als Heizstrecke bezeichnet) und dem Auftrag der Kernschicht, insbesondere des Schaumstoff-Reaktionsgemisches, auf die ggf. erwärmte untere Deckschicht aufgebracht wird.

Der Haftvermittler wird dem Drehteller über mindestens eine Zuführleitung zugeführt. Vorzugsweise ist eine Dosiervorrichtung, z.B. eine Pumpe, vorgesehen. Ist der Haftvermittler nur aus einer Komponente zusammengesetzt, kann der Drehteller über eine oder mehrere Zuführleitungen mit oder ohne Dosiervorrichtung mit einem Vorratsbehälter für den Haftvermittler verbunden sein. Dies gilt auch, wenn sich der Haftvermittler aus mehreren Komponenten zusammensetzt, die im Gemisch gelagert und aus einem Vorratsbehälter dem Drehteller zugeführt werden können. Setzt sich hingegen der Haftvermittler aus mehreren Komponenten zusammen, die erst unmittelbar oder möglichst kurz vor dem Auftrag auf die Deckschicht vermischt werden, ist ein Mischorgan für das Mischen der Komponenten für die Herstellung des Haftvermittlers vorgesehen. Das Mischorgan ist über eine oder mehrere Zuführleitungen mit oder ohne Dosiervorrichtung mit dem Drehteller der Auftragsvorrichtung verbunden. Alternativ zu einer Dosiervorrichtung kann die Zuführung des Haftvermittlers auch unter Druckbeaufschlagung erfolgen.

Als Mischorgan kann eine separate Vorrichtung dienen, welche über die Zuführleitung mit dem Drehteller verbunden ist. Beispiele für Mischorgane sind: Rührwerksmischer, Hochdruckgegenstrom-Injektionsmischer, statische Mischelemente.

Je nach Art der zu mischenden Komponenten für den Haftvermittler, insbesondere, wenn es sich um leicht mischbare Formulierungen des Haftvermittlers handelt, kann die Homogenisierung der Komponenten auch ohne vorgeschaltetes Mischorgan alleine aufgrund der Strömungsbewegungen in dem im Betrieb rotierenden Drehteller erfolgen. Hierfür können die Komponenten dem Drehteller auch unabhängig voneinander durch separate Zuführleitungen mit oder ohne Dosieraggregat zugeführt werden.

Als Zuführleitung kann ein Schlauch, Rohr o.dgl. dienen. Ein Schlauch oder eine Rohrleitung sind bevorzugt. Alternativ zum Ausblasen mit Luft kann als mechanisches Reinigungssystem für die Produktzuführleitung nach Schussende ein verlängerter Steuerstößel im selbstreinigenden Mischkopf des Mischorgans dienen.

Der Drehteller ist mit einer oder mehreren Austrittsöffnungen für den Haftvermittler versehen. Die über den Umfang des Drehtellers, insbesondere äquidistant, verteilten seitlichen Austrittsöffnungen, aus denen der Haftvermittler austritt, sind bevorzugt rund, können jedoch von beliebiger Form, z.B. eckig, schlitzförmig, sein. Der Drehteller weist z.B. die Form eines flachen Hohlzylinders auf, wobei sich die Austrittsöffnungen in der Seitenwand des zylinderförmigen Drehtellers, vorzugsweise am unteren, an den Boden des Drehtellers angrenzenden Rand der Seitenwand befinden. Prinzipiell kann eine beliebige Anzahl von Austrittsöffnungen vorgesehen sein. Bei einer sehr hohen Anzahl von Austrittsöffnungen, die verhältnismäßig dicht nebeneinander angeordnet sind, tritt der Haftvermittler praktisch über den gesamten Umfang des Drehtellers verteilt aus. Schließlich ist auch eine Ausführungsform denkbar, bei der keine einzelnen Austrittsöffnungen mehr vorgesehen sind, sondern der Haftvermittler gleichmäßig über den gesamten Umfang verteilt von dem Drehteller abfließt. In dieser Ausführungsform bildet der Drehteller eine Scheibe.

Ein Drehteller in Form eines flachen Hohlzylinders kann oben offen sein. In dieser Ausführungsform ähnelt der Drehteller einer flachen, runden Schale, in die die Zuführleitung für den Haftvermittler mündet. Alternativ kann der Drehteller jedoch auch oben geschlossen sein. Der Drehteller weist hierbei neben den Austrittsöffnungen noch eine Öffnung für jede Zuführleitung auf, um den Haftvermittler dem Drehteller zu zuführen.

Außer einer flachen, zylindrischen Form des Drehtellers sind weitere, insbesondere rotationssymmetrische Formen möglich. Der Drehteller kann sich beispielsweise nach oben verjüngen und so die Form eines Kegelstumpfes annehmen.

Über die Anzahl der Austrittsöffnungen, die Umfangsgeschwindigkeit und Zentrifugalbeschleunigung an den Austrittsöffnungen des Drehtellers, den Massenstrom des Haftvermittlers und die Höhe der Austrittsöffnungen relativ zur unteren Metalldeckschicht kann der Flächenverteilungsgrad beeinflusst werden. Außerdem kann die Flächenbelegung variiert werden. Der Haftvermittler kann vollflächig oder partiell aufgetragen werden. Die erfindungsgemäße Auftragsvorrichtung für den Haftvermittler ermöglicht insbesondere eine partielle Flächenbelegung, die bereits für eine ausreichende Haftung der Kernschicht auf der Deckschicht sorgt. Bei einer bevorzugten Bandgeschwindigkeit des Doppeltransportbandes als Fördervorrichtung von 2 bis 20 m/min und einer bevorzugten Austragsmenge des Haftvermittlers von 200 bis 1600 g/min beträgt der Durchmesser des Drehtellers bevorzugt 50 bis 100 mm. Dabei sind vorzugsweise 6 bis 12 Austrittöffnungen mit einem Durchmesser von 0,5 bis 2 mm vorgesehen. Der Drehteller rotiert bevorzugt mit einer Drehzahl von 2500 bis 8000 Umdrehungen pro Minute.

Die erfindungsgemäße Auftragsvorrichtung hat gegenüber dem Aufsprühen den Vorteil, dass kein Aerosol gebildet wird. Somit geht kein Haftvermittler durch Sprühnebelbildung verloren. Insgesamt wird mit der erfindungsgemäßen Vorrichtung weniger Haftvermittler benötigt. Darüber hinaus wird mit der erfindungsgemäßen Auftragsvorrichtung eine ausreichend gute Verteilwirkung auf der unteren Deckschicht auch ohne Oszillation der Auftragsvorrichtung über die Breite der Deckschicht erzielt. Dies hat den Vorteil, dass keine bewegbaren Bauteile für die Auftragsvorrichtung des Haftvermittlers vorgesehen werden müssen.

Als Haftvermittler können Einkomponentensysteme z.B. auf Basis von Polyurethan, wie NCO-Gruppen enthaltende Präpolymere, eingesetzt werden. Weitere mögliche Einkomponentensysteme basieren auf Polychloropren, Epoxid oder Polyvinylacetat.

Der Haftvermittler kann auch aus einem Mehrkomponentensystem, bevorzugt aus einem Zweikomponentensystem aufgebaut sein. Bevorzugte Zweikomponentensysteme sind PUR-Systeme. Besonders bevorzugte PUR-Systeme bestehen aus einer Polyolformulierung, z.B. auf Basis von Polyether oder Polyester, oder aus polymerem MDI. Anstelle eines polymeren MDI können auch Gemische verschiedener monomerer MDI verwendet werden.

Als Materialien für die Deckschichten werden üblicherweise Metalle wie Stahl (z.B. verzinkt, lackiert), Aluminium (z.B. lackiert, eloxiert), Kupfer, Edelstahl oder Nichtmetalle wie verstärkte (z.B. mit Glasfasern), unverstärkte und/oder gefüllte Kunststoffe, z.B. Polyvinylchlorid oder auf Polyesterbasis, imprägnierte Pappe, Papier oder Holz. Auch Kombinationen aus den zuvor genannten Werkstoffen sind geeignet.

Als Kernschicht kommen folgende Materialien in Frage: Faserplatten aus Mineralfasern oder Platten aus Hartschaumstoff, z.B. PUR- oder Polyisocyanurat (PIR)-Hartschaumstoff, Polystyrolschaumstoff, Phenolharzschaumstoff.

Zum Ausschäumen der Kernschicht werden ebenfalls bevorzugt Hartschaumstoffe, besonders bevorzugt auf Basis von Polyurethan und/oder Polyisocyanurat, gewählt. Zur Herstellung von Urethan- und/oder Isocyanuratgruppen aufweisenden Hartschaumstoffen können als Ausgangskomponten verwendet werden: a) aliphatische, cycloaliphatische, araliphatische, aromatische und heterocyclische Polyisocyanate, bevorzugt Diphenylmethandiiso-cyanat (MDI) oder Polyphenylpolymethylenpolyisocyanate, Carbodiimidgruppen, Urethangruppen, Allophanatgruppen, Isocyanuratgruppen, Harnstoffgruppen oder Biuretgruppen aufweisende Polyisocyanate, besonders bevorzugt auf der Basis von Polyphenylpolymethylenpolyisocyanat und b) Verbindungen mit mindestens zwei gegenüber Isocyanaten reaktiven Wasserstoffatomen mit einem Molekulargewicht im Bereich von 400 bis 10.000, z.B. Aminogruppen, Thiolgruppen, Hydroxylgruppen oder Carboxylgruppen aufweisende Verbindungen.

Die Herstellung der Schaumstoffe erfolgt unter Verwendung von Hilfs- und Zusatzstoffen wie Katalysatoren, Treibmitteln, Vernetzern, Flammschutzmitteln Schaumstabilisatoren, Fließverbesserer, Inhibitoren.

Ein weiterer Gegenstand der Erfindung ist ein Verfahren zur Herstellung von Sandwich-Verbundelementen unter Verwendung der erfindungsgemäßen Vorrichtung.

Nachfolgend wird die Erfindung anhand der beigefügten Zeichnungen näher erläutert. Es zeigen
- Figur 1: eine schematische Darstellung einer Ausführungsform der erfindungsgemäßen Vorrichtung zur Herstellung von Sandwich-Verbundelementen
- Figur 2: ein schematischer Querschnitt einer Ausführungsform der erfindungsgemäßen Auftragsvorrichtung für den Haftvermittler gemäß Figur 1.

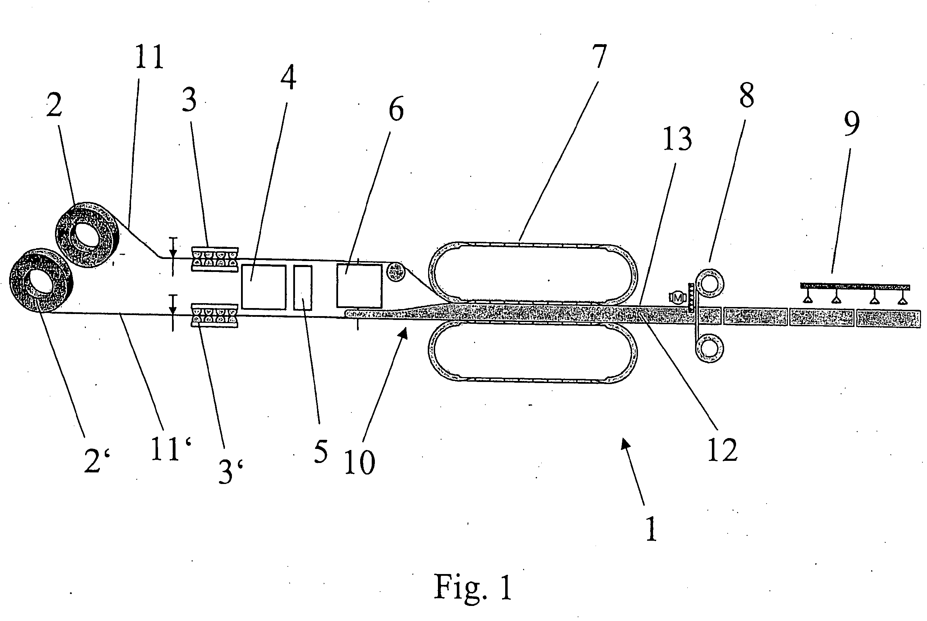

In Figur 1 ist eine Ausführungsform der erfindungsgemäßen Vorrichtung 1 zur Herstellung von Sandwich-Verbundelementen, insbesondere Metall-Schaumstoff-Verbundelementen, schematisch dargestellt. Sie umfasst zwei Abwickelvorrichtungen 2, 2' für die obere und untere Deckschicht 11, 11'. Im Betrieb der erfindungsgemäßen Vorrichtung durchlaufen die Deckschichten 11, 11' zunächst eine Profiliervorrichtung 3, 3' und anschließend eine Heizvorrichtung 4, bevor sie eine Auftragsvorrichtung 5 für den Haftvermittler passieren. Mit Hilfe der Auftragsvorrichtung 5 wird der Haftvermittler auf der unteren Deckschicht aufgetragen. Der Auftragsvorrichtung 5 für den Haftvermittler ist eine Auftragsvorrichtung 6 für die Kernschicht, insbesondere das Schaumstoff-Reaktionsgemisch, nachgeschaltet. Mittels dieser wird die Kemschicht, insbesondere das Reaktionsgemisch für den Hartschaumstoff, zwischen die Deckschichten eingebracht. Die Auftragsvorrichtung 6 umfasst ein Mischorgan (nicht dargestellt) für die Herstellung des Schaumstoff-Reaktionsgemisches. Dies kann z.B. ein Rührwerksmischer sein oder mittels Hochdruckvermischung, z.B. im Gegenstromverfahren, erfolgen. Als Auftragsorgan (nicht dargestellt) selbst kann beispielsweise eine Gießharke oder eine Zungendüse eingesetzt werden. Zum gleichmäßigen Auftrag auf den Auftragstisch wird der Mischkopf mit dem Auftragsorgan in der Regel oszillierend über die Breite der Metalldeckschicht 11' geführt.

An die Auftragsvorrichtung 6 für die Kernschicht schließt sich in der dargestellten Ausführungsform eine Aufschäumstrecke 10 an. Das Aufschäumen beginnt nach kurzer Liegezeit in der Aufschäumstrecke 10 aus dem flüssigen Zustand, wobei der Schaumstoff 12 den Raum zwischen den beiden Deckschichten 11,11' füllt.

Auf die Aufschäumstrecke 10 wiederum folgt eine Fördervorrichtung 7 in Form eines Doppeltransportbandes oberhalb und unterhalb der oberen und unteren Deckschicht 11, 11'. Die Fördervorrichtung 7 verleiht dem Verbundelement 13 seine Dimensionen in Höhe und die nicht dargestellten Seitenketten, -bänder, Klotzketten o.dgl. die Breite. Das Doppeltransportband 7 besteht aus Stahlplatten, die oberhalb der oberen und unterhalb der unteren Deckschicht 11, 11' angeordnet sind. Die mit dem Verbundelement 13 mitlaufenden Stahlplatten des Doppeltransportbandes 7 begrenzen die Expansion des Schaums 12 nach oben und unten.

Die endlos hergestellten Metall-Schaumstoff-Verbundelemente 13 werden hinter der Fördervorrichtung 7 in einer Ablängvorrichtung 8 auf ein gewünschtes Maß geschnitten. Abschließend erfolgt die Abstapelung 9 der einzelnen Verbundelemente 13.

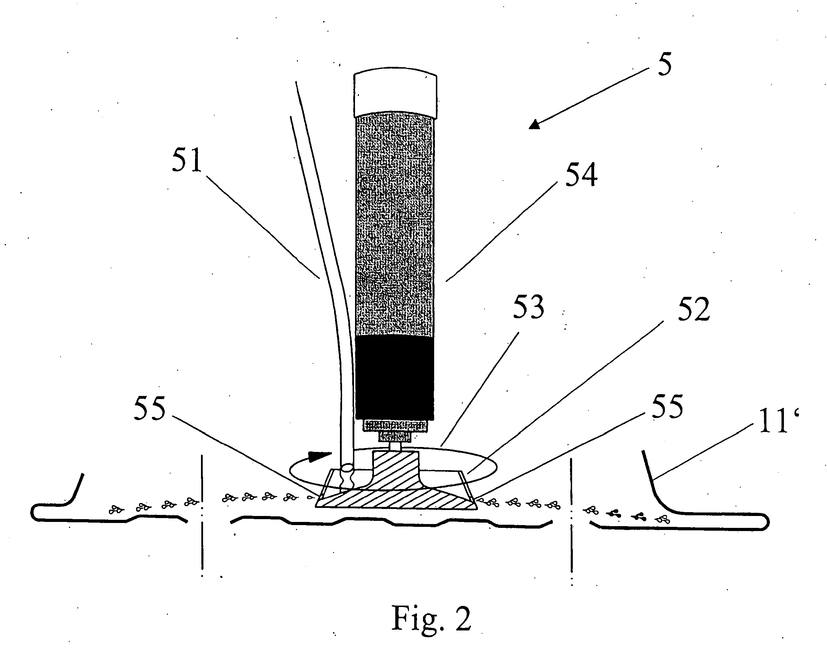

Figur 2 zeigt die Auftragsvorrichtung 5 für den Haftvermittler im Querschnitt. Die Auftragsvorrichtung 5 umfasst einen Drehteller 52 mit seitlichen Austrittsöffnungen 55 (hier sind zwei solcher Austrittsöffnungen dargestellt). Der Drehteller 52 wird mittels eines pneumatischen Antriebs 54 angetrieben. Die Rotationsbewegung des Drehtellers 52 ist durch den Pfeil 53 angedeutet. Der Haftvermittler wird über die Zuführleitung 5 dem Drehteller 52 zugeführt. In der dargestellten Ausführungsform verjüngt sich der Drehteller 52 konisch. Prinzipiell kann der Drehteller 52 auch die Form eines flachen Zylinders bzw. einer dicken Scheibe annehmen. Der Drehteller 52 ist knapp oberhalb der unteren Deckschicht 11' positioniert. Die dargestellte Deckschicht 11' ist profiliert.

### Beispiel

Es wurden Metall-Schaumstoff-Verbundelemente mit handelsüblichen Deckschichten aus verzinktem Stahlblech, beidseitig lackiert, und einem Hartschaumstoff nach unten stehender Verarbeitungsrezeptur unter Verwendung von Produkten der Bayer MaterialScience AG, Deutschland, mit Hilfe einer analog der in Figur 1 dargestellten Vorrichtung hergestellt.

Verarbeitungsrezeptur und -bedingungen für den Schaumstoff:

| Produkt | Gew.-Teile |
|---|---|
| Baymer® VP.PU 28HB31 | 100 |
| Desmorapid® 1792 | 3,7 |
| Desmorapid VP.PU 27HB33 | 2,2 |
| Zusatzmittel VP.PU 19IF00 | 2,8 |
| n-Pentan | 15,5 |
| Desmodur® 44V70 L | 200 |
| | |
| Startzeit, sec | 9 |
| Abbindezeit, sec | 38 |
| Elemttyp | Wand, 120 mm |
| Bandtemperatur, °C | 60 |

Als Haftvermittler wurde ein Zweikomponenten-Haftvermittler auf Basis von Polyurethan eingesetzt. Die Isocyanatkomponente bestand aus polymerem MDI von niedriger Viskosität, Desmodur 44V10 L. Als Polyolkomponente wurde eine Formulierung aus folgenden Komponenten eingesetzt:

| | |
|---|---|
| 59,6 Gew.% | Propylenglycol-Propylenoxid-Polyether, Molmasse 1000 g/mol |
| 40,0 Gew.% | o-Toluylendiamin-Ethylenoxid-Propylenoxid-Polyether, Molmasse 540 g/mol. |
| 0,2 Gew.% | 1-Methylimidazol |
| 0,2 Gew.% | Tegostab B 8443, Fa. Goldschmidt |

Die Verarbeitung der Polyol- und Isocyanatkomponente erfolgte in einem Gewichtsverhältnis von 1:1. Die auf die untere Deckschicht aufgetragene Menge betrug 100 g/m².

Soweit nicht anders angegeben sind alle Produkte von Fa. Bayer MaterialScience AG, Deutschland.

Der Haftvermittler wurde mit einem Drehteller gemäß Figur 2 auf die untere Deckschicht aufgetragen. Der Haftvermittler-Austrag betrug 944 g/min bei einer Geschwindigkeit des Förderbandes von 8 m/min und einer Drehzahl des Drehtellers von 4800 U/min. Der Drehteller wies einen Durchmesser von 50 mm auf mit 6 Austrittsöffnungen deren Durchmesser 1,2 mm betrug. Der Drehteller war so positioniert, dass die Austrittsöffnungen in einem Abstand von 5 mm über der unteren Deckschicht angeordnet waren. Die Breite der unteren Deckschicht war 1180 mm

## Patentansprüche

1. Vorrichtung zur Herstellung von Sandwich-Verbundelementen, wenigstens bestehend aus zwei Zuführvorrichtungen (2, 2') für Deckschichten, an die eine Auftragsvorrichtung (5) für einen Haftvermittler, eine Auftragsvorrichtung (6) für eine Kernschicht, eine Fördervorrichtung (7) und eine Ablängvorrichtung (8) hintereinander geschaltet sind, **dadurch gekennzeichnet, dass** die Auftragsvorrichtung (5) für den Haftvermittler wenigstens aus einer Zuführleitung (51) für den Haftvermittler, einem Drehteller (52) mit mindestens einer seitlichen Austrittsöffnung (55) sowie einem Antrieb (54) für den Drehteller (52) besteht.

2. Vorrichtung nach Anspruch 1, **dadurch gekennzeichnet, dass** 6 bis 12 Austrittsöffnungen (55) vorgesehen sind.

3. Vorrichtung nach einem der Ansprüche 1 oder 2, **dadurch gekennzeichnet, dass** die Austrittsöffnungen (55) einen Durchmesser von 0,5 bis 2 mm aufweisen.

4. Vorrichtung nach einem der Ansprüche 1-3, **dadurch gekennzeichnet, dass** der Durchmesser des Drehtellers (52) 50 bis 100 mm beträgt.

5. Verfahren zur Herstellung von Sandwich-Verbundelemente unter Verwendung einer Vorrichtung nach einem der Ansprüche 1 bis 4.

6. Verfahren nach Anspruch 5, **dadurch gekennzeichnet, dass** der Drehteller mit einer Drehzahl von 2500 bis 8000 Umdrehungen/min rotiert.

7. Verfahren nach einem der Ansprüche 5 oder 6, **dadurch gekennzeichnet, dass** die Fördervorrichtung die Verbundelemente mit einer Geschwindigkeit von 2 bis20 m/min bewegt.

8. Verfahren nach einem der Ansprüche 5-7, **dadurch gekennzeichnet, dass** die Austragsmenge des Haftvermittlers 200 bis 1600 g/min beträgt.

9. Verfahren nach einem der Ansprüche 5-8, **dadurch gekennzeichnet, dass** ein zweikomponentiger Haftvermittler auf Basis von Polyurethan eingesetzt wird.

## Claims

1. An apparatus for the production of sandwich composite elements, at least consisting of two feed apparatuses (2, 2') for facings, to which an application apparatus (5) for an adhesion promoter, an application apparatus (6) for a core layer, a conveying apparatus (7) and a cutting apparatus (8) are connected one after the other, **characterised in that** the application apparatus (5) for the adhesion promoter consists at least of a feed line (51) for the adhesion promoter, a rotary table (52) with at least one lateral outlet orifice (55) and a drive (54) for the rotary table (52).

2. An apparatus according to claim 1, **characterised in that** 6 to 12 outlet orifices (55) are provided.

3. An apparatus according to one of claims 1 or 2, **characterised in that** the outlet orifices (55) have a diameter of 0.5 to 2 mm.

4. An apparatus according to one of claims 1-3, **characterised in that** the diameter of the rotary table (52) is 50 to 100 mm.

5. A process for the production of sandwich composite elements using an apparatus according to one of claims 1 to 4.

6. A process according to claim 5, **characterised in that** the rotary table rotates at a rotational speed of 2500 to 8000 rpm.

7. A process according to one of claims 5 or 6, **characterised in that** the conveying apparatus moves the composite elements at a speed of 2 to 20 m/min.

8. A process according to one of claims 5-7, **characterised in that** the adhesion promoter is discharged in an amount of 200 to 1600 g/min.

9. A process according to one of claims 5-8, **characterised in that** a two-component polyurethane-based adhesion promoter is used.

## Revendications

1. Dispositif de fabrication d'éléments en matériau composite du type sandwich, se composant d'au moins deux dispositifs d'alimentation (2, 2') pour des couches de recouvrement, auxquels succèdent l'un après l'autre un dispositif d'application (5) pour un agent adhésif, un dispositif d'application (6) pour une couche de noyau, un dispositif de transport (7) et un dispositif de coupe à longueur (8), **caractérisé en ce que** le dispositif d'application (5) pour l'agent adhésif se compose au moins d'une conduite d'alimentation (51) pour l'agent adhésif, d'un plateau tournant (52) avec au moins une ouverture de sortie latérale (55) ainsi que d'un entraînement (54) pour le plateau tournant (52).

2. Dispositif selon la revendication 1, **caractérisé en ce qu'**il est prévu 6 à 12 ouvertures de sortie (55).

3. Dispositif selon l'une des revendications 1 ou 2, **caractérisé en ce que** les ouvertures de sortie (55) présentent un diamètre de 0,5 à 2 mm.

4. Dispositif selon l'une quelconque des revendications 1 à 3, **caractérisé en ce que** le diamètre du plateau tournant (52) vaut 50 à 100 mm.

5. Procédé de fabrication d'éléments composites de type sandwich avec utilisation d'un dispositif selon l'une quelconque des revendications 1 à 4.

6. Procédé selon la revendication 5, **caractérisé en ce que** le plateau tournant tourne avec une vitesse de rotation de 2500 à 8000 tours/min.

7. Procédé selon l'une quelconque de revendications 5 ou 6, **caractérisé en ce que** le dispositif de transport déplace les éléments en matériau composite avec une vitesse de 2 à 20 m/min.

8. Procédé selon l'une quelconque des revendications 5 à 7, **caractérisé en ce que** le débit d'application de l'agent adhésif vaut 200 à 1600 g/min.

9. Procédé selon l'une quelconque des revendications 5 à 8, **caractérisé en ce que** l'on utilise un agent adhésif à deux composants à base de polyuréthane.
